# EUROPÄISCHE PATENTSCHRIFT

(11) **EP 4 511 619 B1**
(45) Veröffentlichungstag und Bekanntmachung des Hinweises auf die Patenterteilung: **04.03.2026**
(21) Anmeldenummer: 23732937.0
(22) Anmeldetag: 15.06.2023
(51) Int. Cl.: G01F 1/66, G01F 1/667

(54) **MESSVORRICHTUNG UND VERFAHREN ZU DEREN HERSTELLUNG**
MEASURING DEVICE AND METHOD FOR THE PRODUCTION THEREOF
DISPOSITIF DE MESURE ET SON PROCÉDÉ DE FABRICATION

(30) Priorität: 17.06.2022 DE 102022206104
(43) Veröffentlichungstag der Anmeldung: 26.02.2025
(73) Patentinhaber: MIB GmbH Messtechnik und Industrieberatung, 79206 Breisach (DE)
(72) Erfinder: DEUTSCHER, Martin, 79111 Freiburg (DE); WILL, Thomas, 79235 Vogtsburg (DE)
(74) Vertreter: Isarpatent
(86) Internationale Anmeldenummer: PCT/EP2023/066093
(87) Internationale Veröffentlichungsnummer: WO 2023/242330

(56) Entgegenhaltungen:
- DE-A1- 102008 019 989
- DE-A1- 19 652 655
- US-A- 5 717 145
- US-A1- 2007 062 305

## Beschreibung

Die Erfindung betrifft eine Messvorrichtung zur Messung des Durchflusses eines in einem Messrohr strömenden Mediums mittels Ultraschalls, welches Messrohr in einem Gehäuse der Messvorrichtung zwischen einem Einlauf und einem Auslauf für das Medium angeordnet ist. Außerdem betrifft die Erfindung ein Herstellverfahren für eine solche Messvorrichtung.

Die Messung von Durchflüssen mittels gut durchschallbarer Messstrecken ist für fließfähige Medien bereits bekannt und kommt in verschiedenen Konzepten zur Anwendung. Dabei kennt man die Ausbildung von Messstrecken in Gehäusen, die abhängig beispielsweise von Platzangebot und Einsatzform variieren können.

Aus der EP 0 681 162 A1 kennt man eine Messvorrichtung zur Messung von Fluidströmungen mit Ultraschall, mit einem Gehäuse mit in Verteilkammern einmündenden, im Wesentlichen koaxial zueinander angeordneten Anschlussköpfen für den Zu- und Abfluss der Flüssigkeit, einem die Verteilkammern verbindenden Messrohr, sowie mit im Gehäuse jeweils im Bereich der Enden des Messrohrs angeordneten Ultraschall-Wandlern, wobei das Messrohr gegenüber Verbindungsachse der Anschlussköpfe geneigt ist. Die Vorrichtung ist aus vielen Teilen aufgebaut, ihre Sensoren sind vom Medium berührt, das Messrohr ist ein Einsatz und es existieren viele, ständig wechselnde Querschnitte sowie Toträume.

Die DE 10 2005 041 288 A1 bzw. die US 2007/062305 A1 offenbart eine Durchflussmessvorrichtung zum Messen der Strömungsgeschwindigkeit von in einer Rohrleitung fließenden Medien, die ein Messrohr mit jeweils Stirnseite vorgesehenen Ultraschallwandlern und Anschlussrohre zum einfügenden Anschließen des Durchflussmessgeräts an die und axial zur Rohrleitung aufweist. Aufgrund der Axialität der Anschlüsse ändert sich hier die Strömungsrichtung vor der Messtrecke mehrfach, außerdem ist die Herstellung aufgrund einer höheren Anzahl von Schiebern aufwändig. Weiter zweigt hier ein den Strömungsweg verwinkelndes Verbindungsrohr, das Messrohr und Anschlussrohr verbindet, mit einem 90° Winkel vom Messrohr ab. Das betreffende Verbindungsrohr ist überdies mittels eines Stopfens zu verschließen, wodurch Kapillaren / Toträume zwischen Verbindungsrohrwand und Stopfen entstehen können. Das Verschließen erfordert außerdem einen zusätzlichen Arbeitsschritt.

Die DE 10 2008 019 989 A1 zeigt eine Messvorrichtung, bei der ein Messrohr nachträglich von einem Gehäuse umgossen wird.

In der DE 10 2010 033 858 A1 ist ein Gehäuse für eine Ultraschall-Messvorrichtung eines Fluidflusses offenbart, umfassend einen Fluideinlass, einen Fluidauslass, einen Messbereich mit einer Messtrecke und wenigstens zwei Ankopplungsbereiche, insbesondere Ankopplungsflächen, für einen Ultraschallwandler, wobei das Gehäuse zwei im Bereich der Messstrecke verbundene und/oder verbindbare, getrennt hergestellte Gehäuseteile umfasst, wobei das den Fluideinlass und das den Fluidauslass umfassende Gehäuseteil jeweils wenigstens einen Ankopplungsbereich umfassen. Die Vorrichtung ist aufgrund sich unterscheidender Gehäuseteile aufwändig und sieht überdies ein separates Messrohr und Dichtungen vor. Die Vorrichtung arbeitet zudem über Reflexion von Schall, wobei die Reflektoren in den Messkanal hineinragen. Dadurch entstehen Verwirbelungen, die das Messergebnis negativ beeinflussen können, das Strömen des Mediums wird dabei durch Druckverluste behindert.

Aus der DE 10 2014 010 375 A1 ist eine Ultraschallwandleranordnung mit einem taschenförmigen Gehäuse zur Montage der Ultraschallwandleranordnung in einem Durchgangsloch in einem Gehäuse eines Ultraschallwasserzählers in einer Montageebene bekannt, wobei sich in dem Gehäuse des Ultraschallwasserzählers eine Ultraschallmessstrecke befindet, entlang der eine Laufzeitmessung mittels der Ultraschallwandleranordnung durchführbar ist. Hierbei wird die Messstrecke mit einem großen Durchmesser schräg durchschallt und die jeweiligen Wandler sind von außen über eine Dichtung im Messrohr angeordnet, was eine Gefahr für Leckage mit sich bringt.

Die US 5 717 145 A beschreibt einen Durchflussmesser, der frei von externen Strömungsgeräuschen ist. Der Detektor hat ein Messrohr, einen Einlass und einen Auslass, die beide axial zur Basisachse ausgerichtet sind. Das Rohr ist ein gerades Rohr mit gegenüberliegenden, stromaufwärts und stromabwärts geschlossenen Enden, an jedem dieser Enden ist ein Echolot angebracht, die jeweils in der Lage sind, Ultraschall zu senden und zu empfangen.

Die DE 10 2019 009 033 A1 zeigt schließlich eine Baueinheit zur Anordnung in einer Leitung für ein Fluid, mit einer Messstrecke für einen Durchflussmesser für das Fluid, und mit einem Gehäuse. Das Gehäuse weist einen Einlass sowie einen Auslass für das Fluid auf. Des Weiteren bildet das Gehäuse eine im Wesentlichen geradlinige Durchflussstrecke zwischen dem Einlass und dem Auslass für das Fluid aus. Die Messstrecke ist quer bzw. winklig zu der im Wesentlichen geradlinigen Durchflussstrecke angeordnet. Die betreffende Anordnung macht außerdem das Abdichten der Taschen für die Wandler notwendig, vor welchen außerdem ein Ansammeln von Luft, die nicht von der Strömung mitgenommen wird, wahrscheinlich ist.

Es ist daher die Aufgabe der vorliegenden Erfindung, ein Messvorrichtung zur Verfügung zu stellen, die bei hoher Zuverlässigkeit einfach und kostengünstig herzustellen ist, und dessen geringe Anzahl von Einzelteilen sich mit reduziertem Montageaufwand zusammenbauen lässt.

Diese Aufgabe wird durch eine Vorrichtung mit den Merkmalen des Anspruchs 1 gelöst. Die erfindungsgemäße Lösung besteht also insbesondere darin, dass bei der Messvorrichtung das Messrohr in einem Gehäuse der Messvorrichtung zwischen einem Einlauf und einem Auslauf für das Medium angeordnet ist, wobei zum Durchschallen des Mediums wenigstens zwei entlang des Messrohres voneinander beabstandete Ultraschallwandler vorgesehen sind, wobei in Endbereichen des Messrohrs jeweils wenigstens ein Ultraschallwandler derart angeordnet ist, dass zwischen den Ultraschallwandler eine Messstrecke gebildet ist, die eine Durchschallung parallel zu einer Längsachse des Messrohres gestattet, wobei in den Endbereichen des Messrohrs an dem Gehäuse jeweils eine Aufnahme vorgesehen ist, in welcher zumindest der jeweilige Ultraschallwandler aufnehmbar oder aufgenommen ist, wobei die jeweilige Aufnahme von dem Messrohr durch einen Wandabschnitt des jeweiligen Gehäuseteils getrennt ist, und wobei der Wandabschnitt im überwiegenden Teil der Querschnittsfläche des Messrohrs eine im Wesentlichen gleichbleibende Wandstärke aufweist, wobei das Gehäuse zusammen mit dem Messrohr aus wenigstens einem Kunststoff ausgebildeten, mittels eines urformenden Fertigungs-verfahrens hergestellten Gehäuseteilen zusammensetzbar oder zusammengesetzt ist, wobei das Gehäuse mit zwei identischen Gehäuseteilen ausgebildet ist, die durch einen Schweißvorgang miteinander dichtungsfrei verbindbar oder verbunden sind. Die Messvorrichtung zeichnet sich erfindungsgemäß dadurch aus, dass an dem Einlauf und dem Auslauf angeordnete Kanalabschnitte in Form eines Kreisbogens gekrümmt und jeweils mittels eines einzigen gekrümmten Schiebers geformt sind, dessen Außenwand den dem jeweiligen Ultraschallwandler zugewandten Wandabschnitt formt und dass ein Mittelpunkt desjenigen Kreises, dem der Kreisbogen zugeordnet ist, gegenüber der Längsachse des Messrohrs einen exzentrischen Versatz aufweist. Die erfindungsgemäße Messvorrichtung weist dabei also ein gespritztes Messrohr auf, bei dem die Durchschallung vorteilhafterweise parallel (und antiparallel) zum Fluss des strömenden Mediums stattfindet. Dabei ist der Schallweg reflexionsfrei, kapillarfrei und es existieren keine Toträume, überdies weist die Messstrecke über ihre gesamte Länge einen nahezu unveränderten Durchmesser auf, was die einzurechnenden Korrekturen bei der Bestimmung der Messgröße(n) stark reduziert.

Überdies begünstigt die erfindungsgemäße Anordnung der Kanalabschnitte eine zuverlässige und gleichmäßige Einkopplung des Ultraschalls in die Messtrecke, da der Mittelpunkt des dem Kreisbogen zugeordneten Kreises derart gegenüber der Längsachse des Messrohrs versetzt ist, dass ein Radius des Kreises parallel, aber nicht koaxial zu der Längsachse des Messrohrs verläuft. Der Versatz liegt dabei in Richtung auf den jeweiligen Kanalabschnitt hin vor.

Bevorzugte Weiterbildungen der erfindungsgemäßen Vorrichtung finden sich in den entsprechenden Unteransprüchen.

Bei einer vorteilhaften Ausführungsform der erfindungsgemäßen Vorrichtung kann das Messrohr einen runden, insbesondere kreisrunden, Querschnitt aufweisen, wodurch eine zweckmäßige gut durchschallbare Messstrecke geschaffen wird. Insbesondere ist die Messstrecke dabei vorteilhaft im Wesentlichen über ihre gesamte Länge ohne Querschnittsänderung ausgebildet.

Bei einer sehr gut in eine von dem jeweiligen Medium durchströmte Rohrleitung integrierbaren Ausführungsform der erfindungsgemäßen Messvorrichtung sind die Kanalabschnitte an ihren dem Messrohr abgewandten Ende jeweils mit einem Anschlussstück versehen, wobei die Anschlussstücke eine gemeinsame Mittelachse aufweisen, die eine Tangente des Kreisbogens bildet. Auf diese Weise fluchten Ein- und Auslauf der Messvorrichtung miteinander.

In einer bevorzugten Weiterbildung, die eine gute Zugänglichkeit der Aufnahmen sicherstellt, befinden sich diese jeweils an den einander abgewandten Stirnseiten des Gehäuses, also in einem Endbereich des jeweiligen Gehäuseteils. Zwar muss der jeweilige Wandabschnitt mit durchschallt werden , jedoch ist ein Kontakt mit dem Medium durch den jeweiligen Wandler ausgeschlossen. Der Wandabschnitt überdeckt dabei den Querschnitt des Messrohrs vorzugsweise vollständig. Die Wandstärke ist nicht notwendig an jedem Punkt des Wandabschnitts gleich, jedoch derart weitestgehend, dass von einer den ganz überwiegenden Teil des Messrohrquerschnitts überdeckenden Fläche gleichbleibender Wandstärke ausgegangen werden kann.

Um die Ultraschallwandler auch sonst vor ihrer Umgebung schützen zu können und ggf. unbeabsichtigte negative Einflüsse auf den Messvorgang zu reduzieren, kann bei einer weiteren Ausführungsform die jeweilige Aufnahme mittels eines Deckelteils verschließbar vorgesehen sein, so dass er Innenraum der Aufnahme gegenüber der Umgebung der Messvorrichtung isoliert ist.

Um notwendigenfalls trotzdem Zugriff auf den oder die Wandler oder ggf. weitere Sensoren in der Aufnahme, bzw. prinzipiell auf deren Innenraum zu haben, kann bei einer bevorzugten Weiterbildung das Deckelteil mit dem jeweiligen Gehäuseteil lösbar verbindbar vorgesehen sein. Die Verbindung zwischen Deckelteil und Aufnahme ist dabei in verschiedenen Ausgestaltungen möglich. So kann zwischen Deckel und Gehäuse ein Gewindeeingriff vorgesehen sein, wenigstens einer der Verbindungspartner kann durch Formgebung gegenüber dem anderen vorgespannt sein oder es ist etwa eine Schnapp- und/oder Rastverbindung zwischen ihnen vorgesehen. Diese Aufzählung ist nicht erschöpfend. Zwischen Deckelteil und Aufnahme kann ein Dichtmittel vorgesehen werden.

Die Anordnung und Festlegung der Wandler in den betreffenden Aufnahmen erfolgt dabei sinnvollerweise derart, dass jeder Wandler an dem den Querschnitt der Messtrecke überdeckenden Wandabschnitt der Aufnahme durch eine Fixierung ortsfest gehalten ist. Hierfür kann bei einer weiteren Ausführungsform dem Deckelteil ein Stempelstück zugeordnet sein, welches in Gebrauchsstellung zumindest den jeweiligen Ultraschallwandler gegen den Wandabschnitt drückt. Dabei kann das Stempelstück auch weitere Sensoren, bspw. einen Temperatursensor gegen den Wandabschnitt drücken. Das Stempelstück kann bevorzugt in Grenzen nachgiebig bzw. elastisch vorgesehen sein, außerdem ist es gegenüber dem jeweiligen Deckelteil vorzugsweise drehbeweglich vorgesehen. Es können wahlweise oder zusätzlich auch andere Fixierungen vorgesehen sein, bspw. können Wandler / Sensoren in der Aufnahme vergossen sein. Das Stempelstück kann auch integral mit dem Deckelteil ausgebildet sein.

In einer bevorzugten Weiterbildung kann bei der erfindungsgemäßen Messvorrichtung zwischen dem Stempelstück und dem jeweiligen Ultraschallwandler überdies ein elastisches Element angeordnet sein, so dass eine definierte, aber sanfte Art der Übertragung der Andrückkraft auf den Ultraschallwandler erreicht wird. Das elastische Element kann dabei etwa in Form eines Stückes Schaumstoff ausgebildet sein, es sind aber auch andere Ausführungen denkbar.

Im Falle einer Fixierung mittels eines Stempelstücks, ist dieses bei einer bevorzugten Weiterbildung gegenüber dem Deckelteil beweglich vorgesehen, so dass Kräfte einer Bewegung des Deckelteils nicht mit negativen Folgen auf den Wandler oder auch dessen Kabel übertragen werden. Ist das Deckelteil etwa an die Aufnahme mittels eines Gewindes geschraubt, bietet es sich an, das Stempelstück vorzugsweise drehbeweglich gegenüber dem Deckelteil vorzusehen. Gegenüber dem Messrohr, und damit gegenüber dem Wandler und ggf. weiteren Sensoren ist das Stempelstück jedoch bevorzugt verdrehsicher ausgeführt.

Bei einer anderen vorteilhaften Ausführung der Ultraschall-Messvorrichtung können die Gehäuseteile entlang des Messrohres neben diesem einen durch die Zusammenfügung von Gehäuseteilen zu dem Gehäuse gebildeten, verschließbaren Bauraum aufweisen, der zur Aufnahme elektronischer Komponenten eingerichtet ist. In diesem können etwa Verbinder zum Verbinden der Wandlerkabel zu Anschlusskabeln untergebracht werden, des Weiteren Messelektronik, etwa in Form von Auswerteelektronik oder Adapterplatinen zwischen den erwähnten Kabeln. Auch kann dort wenigstens ein nichtflüchtiger Speicher angeordnet sein, der Kalibrierwerte aufnehmen und vorhalten kann. Der Bauraum kann beispielsweise durch einen Deckel oder einen Gießvorgang verschlossen werden.

Zur Fixierung der Messvorrichtung an einem Einbauort kann bei einer anderen Ausführungsform an einem Öffnungsrand des Bauraums eine Befestigungseinrichtung vorgesehen ist, mittels derer das jeweilige Gehäuseteil, an dem die Befestigungseinrichtung angeordnet ist und darüber das gesamte Gehäuse festlegbar ist. Es kann sich dabei bspw. um eine Öse oder ein Langloch handeln, die in einem von dem Gehäuseteil vorspringenden Abschnitt angeordnet sind und bei Festlegung von einem Festlegemittel durchgriffen werden.

Um in zweckmäßiger Weise der Messvorrichtung Anschlusskabel zuführen und an dem Gehäuse festlegen zu können, können bei einer weiteren Ausführungsform der erfindungsgemäßen Messvorrichtung die Gehäuseteile in einer Gehäuseteilwand eine verschließbare Öffnung aufweisen. Durch die betreffende Öffnung kann das Anschlusskabel zugeführt und mittels Mutter verschraubt werden. Bei Nichtnutzung lässt sich die Öffnung mittels verschiedener Maßnahmen, wie Anordnung eines Deckels, Vergießen oder dergleichen verschließen.

Die oben genannte Aufgabe wird auch gelöst durch ein Verfahren zur Herstellung einer Messvorrichtung zur Messung des Durchflusses eines in einem Messrohr strömenden Mediums mittels Ultraschalls, insbesondere einer Messvorrichtung nach einem der vorhergehenden Ansprüche, mit zumindest den folgenden Schritten:
- Zur Verfügung stellen einer Spritzgießform für ein Gehäuseteil;
- Einlegen eines geraden Schiebers und eines einen Kreisbogenabschnitt beschreibenden Schiebers in die Spritzgießform, wobei ein Mittelpunkt des dem Kreisbogen zugeordneten Kreises gegenüber der Längsachse des geraden Schiebers einen exzentrischen Versatz aufweist;
- Schließen der Form und Spritzgießen des Gehäuseteils, wobei durch den gekrümmten Schieber (ein Kanalabschnitt des Gehäuseteils mit einem einem Ultraschallwandler der Messvorrichtung gegenüberliegenden Wandabschnitt geformt wird;
- Entformen des Gehäuseteils und Entnahme der Schieber;
- Dichtungsfreies Verbinden zweier Gehäuseteile in einem Schweißvorgang entlang einer Naht;
- Anordnen von Ultraschallwandlern in Aufnahmen der Gehäuseteile.

Auch bei dem erfindungsgemäßen Verfahren begünstigt die erfindungsgemäße Anordnung der Kanalabschnitte eine zuverlässige und gleichmäßige Einkopplung des Ultraschalls in die Messtrecke, da der Mittelpunkt des dem Kreisbogen zugeordneten Kreises derart gegenüber der Längsachse des Messrohrs versetzt ist, dass ein Radius des Kreises parallel, aber nicht koaxial zu der Längsachse des Messrohrs verläuft. Der Versatz liegt dabei in Richtung der Zutrittsöffnung zu dem Messrohr vor, und wird durch die Anordnung der hierfür mit der passenden Geometrie ausgebildeten Schieber erreicht.

Die obigen Ausgestaltungen und Weiterbildungen lassen sich, sofern zweckmäßig, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung, welche durch die beigefügten Patentansprüche definiert ist.

Die Erfindung wird nachstehend anhand von Ausführungsbeispielen in den Figuren der Zeichnung näher erläutert. In teilweise schematisierter Darstellung zeigen hierbei:
Fig. 1 eine ebene, geschnittene Seitenansicht einer ersten Ausführungsform einer Messvorrichtung mit einem aus zwei Gehäuseteilen zusammengesetzten Gehäuse;
Fig. 2 eine vergrößerte Ansicht eines Endbereichs der Messvorrichtung aus der Fig. 1;
Fig. 3 eine perspektivische Seitenansicht eines Gehäuseteils der Messvorrichtung aus den Fig. 1 und 2 auf die dem anderen (nicht abgebildeten) Gehäuseteil zugewandte Stirnseite;
Fig. 4 einen vergrößerten Ausschnitt der Darstellung der Messvorrichtung aus der Fig. 2 ohne Abbildung des Kreisbogens.
Fig. 5 eine ebene, geschnittene Seitenansicht einer zweiten Ausführungsform der Messvorrichtung, bei der die Aufnahme des Gehäuseteils, in welcher ein Ultraschallwandler und ein Temperatursensor angeordnet sind, durch ein anderes Deckelteil verschlossen ist, und bei der der Wandler und der Temperatursensor in der Aufnahme vergossen sind;
Fig. 6 eine perspektivische Seitenansicht einer der Messvorrichtung aus den Fig. 1 bis 4, mit an den Gehäuseteilen angeordneten Befestigungseinrichtungen und in einem Bauraum neben dem Messrohr aufgenommener Messelektronik;
Fig. 7 eine ebene Draufsicht von oben auf eine Messvorrichtung aus der Fig. 6;
Fig. 8a-8c jeweils eine perspektivische Seitenansicht eines Gehäuseteils der Messvorrichtung aus den Fig. 1 bis 3 sowie 6 und 7 beim Entformen durch Entnahme der Schieber aus dem spritzgegossenen Gehäuseteil.

Die beigefügten Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungsfiguren. Die Elemente der Zeichnungsfiguren sind nicht notwendigerweise maßstabsgetreu zueinander gezeigt.

In sämtlichen Figuren sind gleiche bzw. funktionsgleiche Elemente und Vorrichtungen - sofern nichts anderes angegeben ist - mit denselben Bezugszeichen versehen worden.

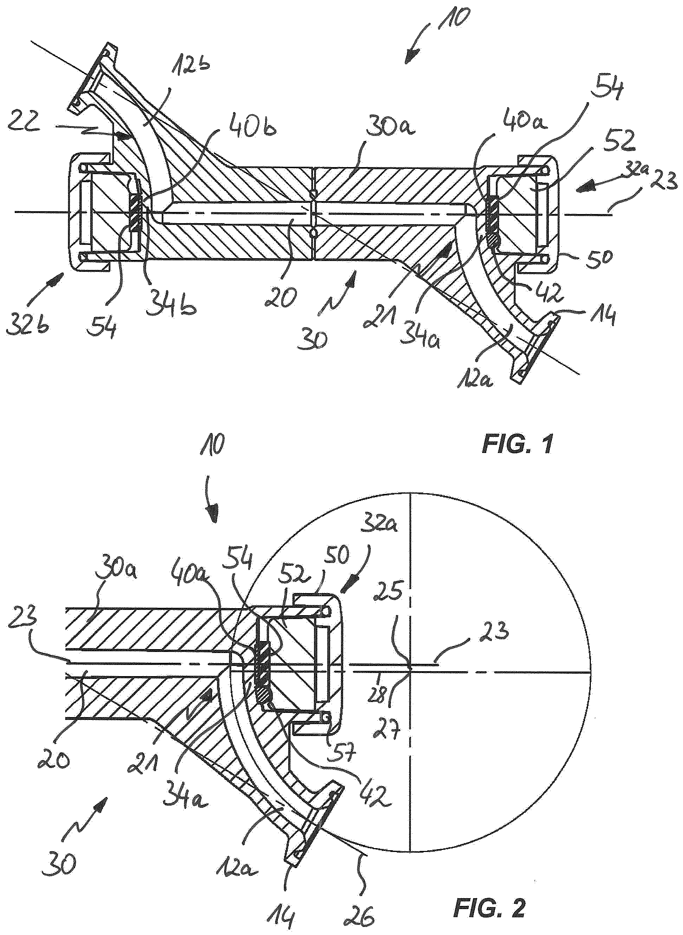

Die Fig. 1 zeigt eine ebene, geschnittene Seitenansicht einer ersten Ausführungsform der Messvorrichtung 10 mit einem aus zwei Gehäuseteilen 30a, 30b zusammengesetzten Gehäuse 30. Die gezeigte Messvorrichtung 10 ist zur Messung des Durchflusses eines in den Messrohr 20 strömenden Mediums mittels Ultraschalls vorgesehen. Das Messrohr 20 in dem Gehäuse 30 erstreckt sich zwischen dem Einlauf 21 und dem Auslauf 22, welche das in dem Messrohr strömende Medium zuführen bzw. abführen. Zum Durchschallen des Mediums sind entlang des Messerohres 20 voneinander beanstandete Ultraschallwandler 40a, 40b vorgesehen. Dabei ist in Endbereichen des Messrohres 20 jeweils ein Ultraschallwandler 40a, 40b derart angeordnet, dass zwischen den Ultraschallwandlern 40a, 40b eine Messstrecke gebildet ist, die eine Durchschallung parallel zu einer Längsachse 23 des Messrohres 20 gestattet. Das Gehäuse 30 ist zusammen mit dem Messrohr 20 aus zwei Gehäuseteilen 30a, 30b zusammengesetzt, wobei die Gehäuseteile 30a, 30b aus einem Kunststoff mittels eines Spritzgussverfahrens hergestellt sind. Das Gehäuse 30 ist dabei mit zwei identischen Gehäuseteilen 30a, 30b ausgebildet, die durch einen Schweißvorgang miteinander dichtungsfrei verbunden sind. Wie man hierzu noch besser der Fig. 2 entnimmt, sind an dem Einlauf 21 und dem Auslauf 22 des Gehäuses 30 angeordnete Kanalabschnitte 12a, 12b in Form eines Kreisbogens gekrümmt, wobei ein Mittelpunkt des Kreises, zu welchem der Kreisbogen gehört, gegenüber der Längsachse 23 des Messrohrs 20 einen exzentrischen Versatz 25 aufweist. Dabei ist der Mittelpunkt 27 des dem Kreisbogen zugeordneten Kreises derart gegenüber der Längsachse 23 des Messrohrs 20 versetzt, dass ein Radius 28 des Kreises parallel, aber nicht koaxial zu der Längsachse 23 des Messrohrs verläuft.

Die Fig. 2 zeigt eine vergrößerte Ansicht eines Endbereichs der Messvorrichtung aus der Fig. 1. Dabei erkennt man sowohl in Fig. 1 wie in Fig. 2, dass in Endbereichen des Messrohrs 20 an dem Gehäuse 30 jeweils eine Aufnahme 32a, 32b vorgesehen ist, in welcher der jeweilige Ultraschallwandler 40a, 40b aufgenommen ist. Die Aufnahmen 32a, 32b befinden sich jeweils an den einander abgewandten Stirnseiten des Gehäuses 30. In der Aufnahme sind ein Ultraschallwandler 40a, 40b, und in der Aufnahme 32a des Gehäuseteil 30a zusätzlich ein Temperatursensor 42 aufgenommen. Die Aufnahmen 32a, 32b sind durch ein topfartiges Deckelteil 50 verschlossen, das jeweils die Außenwand der Aufnahme übergreift. Eine Ausnehmung am Rand des Deckelteils 50 bildet mit einem Vorsprung der Außenwand der Aufnahme 32a, 32b einen Bajonettverschluss. Da dieser mittels einer Drehbewegung wieder zu öffnen ist, drückt das Deckelteil 50 den Ultraschallwandler 40a, 40b und den Temperatursensor 42 über ein separates Stempelstück 52 gegen die dem Messrohr 20 abgewandte Seite des Wandabschnitts 34a, 34b. Das Stempelstück 52 ist in Grenzen nachgiebig bzw. elastisch vorgesehen, außerdem ist es gegenüber dem jeweiligen Deckelteil 50 drehbeweglich, gegenüber der jeweiligen Aufnahme 32a, 32b bzw. dem Gehäuseteil 30, 30b jedoch verdrehsicher. Weiter wird die Nachgiebigkeit hier durch ein zwischen dem Stempelstück 52 und dem Ultraschallwandler 40a angeordnetes elastisches Element 54 erreicht.

Die jeweilige Aufnahme 32a, 32b ist dabei von dem Messrohr 20 durch den Wandabschnitt 34a, 34b des jeweiligen Gehäuseteils 30a, 30b getrennt. Hierbei weist der Wandabschnitt 34a, 34b im überwiegenden Teil der Querschnittsfläche des Messrohrs 20 jeweils eine gleichbleibende Wandstärke auf. Insbesondere verdeutlicht die Fig. 2 den Umstand, dass an dem Einlauf 21 und dem Auslauf 22 angeordnete Kanalabschnitte 12a, 12b des Gehäuses 30 in Form eines Kreisbogens gekrümmt sind, und dass ein Mittelpunkt desjenigen Kreises, dem der Kreisbogen zugeordnet ist, gegenüber der Längsachse des Messrohrs 20 einen exzentrischen Versatz 25 aufweist. Hierdurch ist der Wandabschnitt 34a des Gehäuseteils 30a um eine um den Versatz 25 längere Strecke quer zur Längsachse 23 des Messrohrs 20 annähernd gerade, wodurch der Schall besonders effektiv parallel/antiparallel zur Flussrichtung des Mediums in die Messtrecke eingekoppelt werden kann. Weiter erkennt man, dass die Kanalabschnitte 12a, 12b an ihren dem Messrohr 20 abgewandten Ende jeweils mit einem Anschlussstück 14 versehen sind, wobei die Anschlussstücke 14 eine gemeinsame Mittelachse 26 aufweisen, die eine Tangente des Kreisbogens bildet. Die Mittelachse 26, die Längsachse 23 des Messrohrs 20 und der Kreisradius 28 sind in der Fig. 2 strichliniert dargestellt.

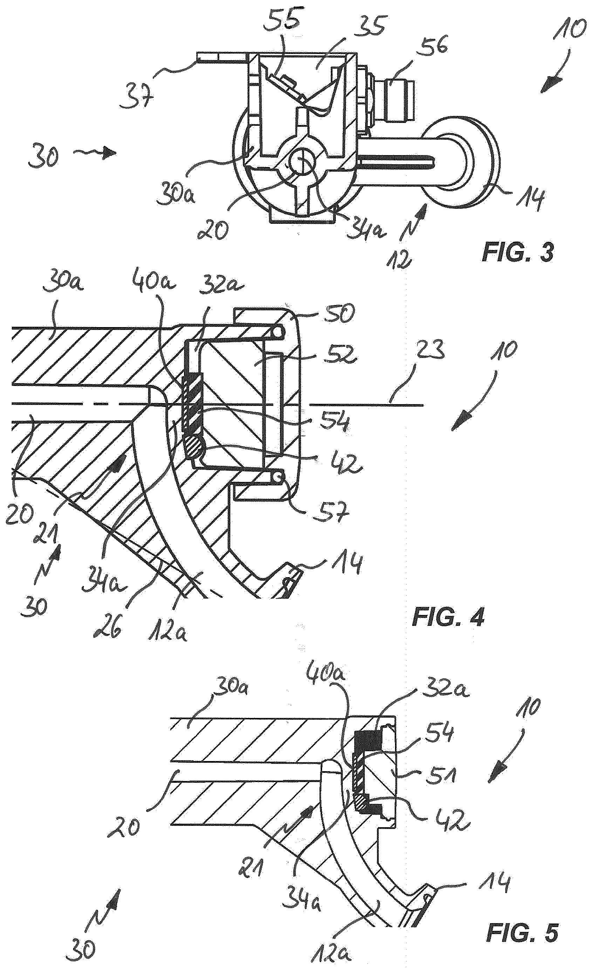

Die Fig. 3 zeigt eine perspektivische Seitenansicht eines Gehäuseteils 30a der Messvorrichtung aus den Fig. 1 und 2 auf die dem anderen, nicht abgebildeten Gehäuseteil 30b zugewandte Stirnseite. Hierbei erkennt man insbesondere, dass das Messrohr 20 einen kreisrunden Querschnitt aufweist. Weiter ist zu erkennen, dass an dem Gehäuse 30 bzw. den zusammengesetzten Gehäuseteilen 30a, 30b ein sich entlang des Messrohres 20 neben diesem durch die Zusammenfügung der Gehäuseteile 30a, 30b zu dem Gehäuse 30 gebildeter, verschließbarer Bauraum 35 gebildet wird. Der Bauraum 35 ist gegenüber der Ebene, in der der Querschnitt von Messrohr 20 und Kanalabschnitten 12a, 12b sich befindet, versetzt.

In der Fig. 4 ist ein vergrößerter Ausschnitt der Darstellung der Messvorrichtung 10 aus der Fig. 2 ohne Abbildung des Kreisbogens gezeigt, auf welchen aus Gründen der Übersichtlichkeit zu Darstellung insbesondere des Aufnahmebereichs verzichtet wurde. Besonders gut erkennt man hier die Anordnung des Ultraschallwandlers 40a auf der dem Messrohr 20 abgewandten Seite des Wandabschnitts 34a sowie dessen Andrücken an diese Seite durch das Zusammenwirken von Deckelteil 50, Stempelstück 52 und elastischem Element 54. Weiter entnimmt man der Fig.4 besonders gut, dass zwischen Deckelteil 50 und dem Rand des Aufnahmebereichs 32a ein Dichtmittel in Form einer Dichtung 57 angeordnet ist.

Die Fig. 5 zeigt eine ebene, geschnittene Seitenansicht einer zweiten Ausführungsform der Messvorrichtung 10, bei der die Aufnahme 32a des Gehäuseteils 30a, in welcher ein Ultraschallwandler 40a und ein Temperatursensor 42 angeordnet sind, durch ein anderes Deckelteil 51 verschlossen ist. Weiter sind bei der Ausführungsform der Fig. 5 der Ultraschallwandler und der Temperatursensor in der Aufnahme vergossen. In der Fig. 5 bildet das Deckelteil 51 selbst mit seinem dem Innern der Aufnahme 32a zugewandten Ende eine Art Stempelstück, das den Ultraschallwandler 40a und den Temperatursensor 42 gegen das Wandstück drückt. Das Deckelteil 51 geht dabei mit dem Innenrand der Aufnahme 32a eine Rastverbindung ein.

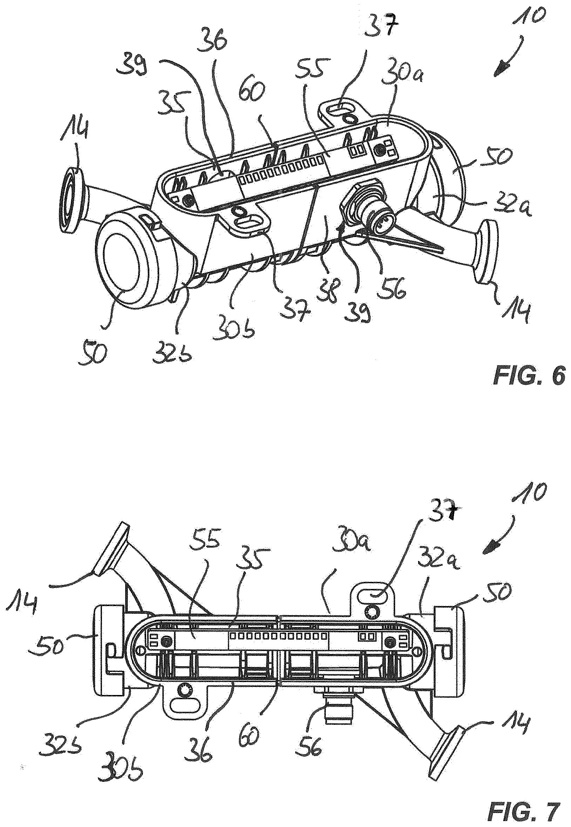

Die Fig. 6 zeigt eine perspektivische Seitenansicht einer der Messvorrichtung 10 aus den Fig. 1 bis 4, mit an den Gehäuseteilen 30a, 30b angeordneten Befestigungseinrichtungen 37 und in einem Bauraum 35 neben dem Messrohr 20 aufgenommener Messelektronik 55. Die Fig. 7 zeigt eine ebene Draufsicht von oben auf eine Messvorrichtung 10 aus der Fig. 6. Dabei erkennt man gut, dass der Bauraum 35 neben dem Messrohr 20 durch das Zusammenfügen der Gehäuseteile 30a, 30b zu dem Gehäuse entsteht. Überdies ist zu erkenn, dass an dem Öffnungsrand 36 des Bauraums 35 eine ösenartige Befestigungseinrichtung 37 vorgesehen ist, mittels derer das jeweils zugeordnete Gehäuseteil 30a, 30b, und damit natürlich auch das Gehäuse 30 selbst, festlegbar ist. Außerdem ist gezeigt, dass die Gehäuseteile 30a, 30b in einer Gehäuseteilwand 38 eine verschließbare Öffnung 39 aufweisen, durch welche eine Anschlussbuchse 56 geführt und an der Öffnung 39 festgelegt ist, wodurch die Messvorrichtung mittels eines Steckers an einen Signalweg anschließbar ist.

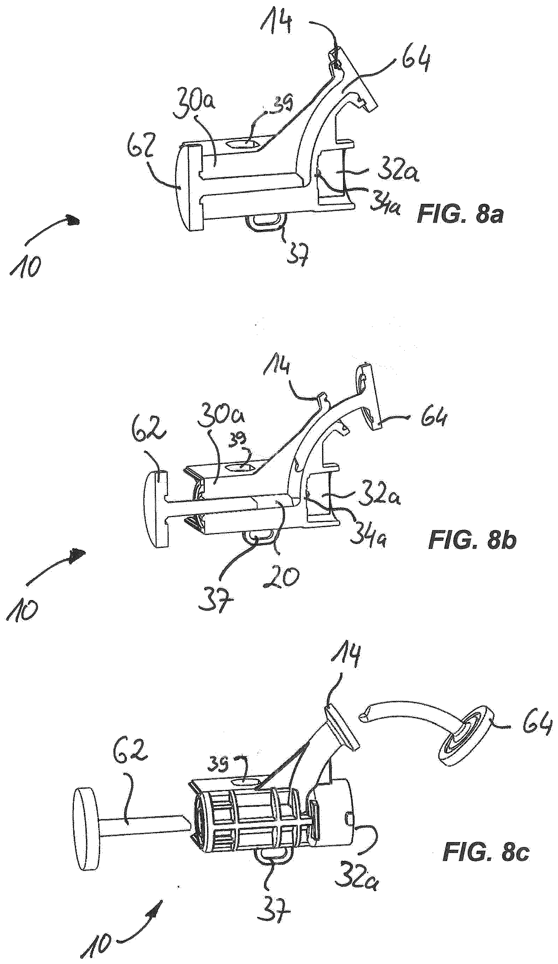

Die Fig. 8a-8c zeigen jeweils eine perspektivische Seitenansicht eines Gehäuseteils 30a der Messvorrichtung 10 aus den Fig. 1 bis 3 sowie 6 und 7 beim Entformen durch Entnahme von Schiebern 62, 64 aus dem spritzgegossenen Gehäuseteil 30a. Die Schieber 62, 64, ein gerade Schieber 62 und ein kreisbogenförmig gekrümmter Schieber 64 waren zuvor in einem Verfahrensschritt des erfindungsgemäßen Herstellungsverfahrens in eine nicht dargestellte Spritzgießform eingelegt worden. In der geschnittenen perspektivischen Ansicht der Fig. 8a sind die Schieber 62, 64 in ihrer während des Spritzgießvorgangs eingenommenen Position zu erkennen, während sie in der der geschnittenen perspektivischen Ansicht der Fig. 8b bereits halb aus der jeweils durch sie erzeugten Ausnehmung in dem Gehäuseteil 30a herausgezogen sind. In der nicht geschnittenen perspektivischen Seitenansicht der Fig. 8c sind die Schieber 62, 64 ganz aus dem gegossenen Gehäuseteil 30a entnommen, wobei der gerade Schieber 62 einen Abschnitt des Messrohrs der Messvorrichtung 10 erzeugt hat, und der gekrümmte Schieber 64 den kreisbogenförmigen Kanalabschnitt 12a. Zu erkennen ist überdies, dass die Schieber 62, 64 winklig geformte Endabschnitte aufweisen, die in die Spritzgießform in Gießposition eingelegt mit diesen Endabschnitten derart einen formschlüssigen Eingriff miteinander bilden, dass überstandsfreie Querschnitte an dem Messrohr 20 und den Kanalabschnitten entstehen.

Nach der beschriebenen Entnahme der Schieber 62, 64 können nun zwei auf diese Weise erzeugte Gehäuseteile 30a, 30b zu einem Gehäuse mittels eines Schweißvorgangs verbunden werden und die Ultraschallwandler in den Aufnahmen 32a, 32b platziert werden (in Fig. 8a-8c nicht gezeigt).

Obwohl die vorliegende Erfindung vorstehend anhand bevorzugter Ausführungsbeispiele beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung, welche durch die beigefügten Patentansprüche definiert ist, abzuweichen.

### Bezugszeichenliste

- 10: Messvorrichtung
- 12a, 12b: Kanalabschnitte
- 14: Anschlussstück
- 20: Messrohr
- 21: Einlauf
- 22: Auslauf
- 23: Längsachse des Messrohrs
- 25: Versatz
- 26: Mittelachse Anschlussstück
- 27: Kreismittelpunkt
- 28: Kreisradius
- 30: Gehäuse
- 30a, 30b: Gehäuseteil
- 32a, 32b: Aufnahme
- 34a, 34b: Wandabschnitt
- 35: Bauraum
- 36: Öffnungsrand des Bauraums
- 37: Befestigungseinrichtung
- 38: Gehäuseteilwand
- 39: Öffnung
- 40a, 40b: Ultraschallwandler
- 42: Temperatursensor
- 50: Deckelteil
- 51: Deckelteil
- 52: Stempelstück
- 54: elastisches Element
- 55: Messelektronik
- 56: Anschlussbuchse
- 57: Dichtung
- 60: Naht
- 62: Schieber gerade
- 64: Schieber gekrümmt

## Patentansprüche

1. Messvorrichtung (10) zur Messung des Durchflusses eines in einem Messrohr (20) strömenden Mediums mittels Ultraschalls, welches Messrohr (20) in einem Gehäuse (30) der Messvorrichtung (10) zwischen einem Einlauf (21) und einem Auslauf (22) für das Medium angeordnet ist, wobei zum Durchschallen des Mediums wenigstens zwei entlang des Messrohres (20) voneinander beabstandete Ultraschallwandler (40a, 40b) vorgesehen sind, wobei in Endbereichen des Messrohrs (20) jeweils wenigstens ein Ultraschallwandler (40a, 40b) derart angeordnet ist, dass zwischen den Ultraschallwandlern (40a, 40b) eine Messstrecke gebildet ist, die eine Durchschallung parallel zu einer Längsachse (23) des Messrohres (20) gestattet, wobei in den Endbereichen des Messrohrs (20) an dem Gehäuse (30) jeweils eine Aufnahme (32a, 32b) vorgesehen ist, in welcher zumindest der jeweilige Ultraschallwandler (40a, 40b) aufnehmbar oder aufgenommen ist, wobei die jeweilige Aufnahme (32a, 32b) von dem Messrohr (20) durch einen Wandabschnitt (34a, 34b) des jeweiligen Gehäuseteils (30a, 30b) getrennt ist, und wobei der Wandabschnitt (34a, 34b) im überwiegenden Teil der Querschnittsfläche des Messrohrs (20) eine im Wesentlichen gleichbleibende Wandstärke aufweist, wobei das Gehäuse (30) zusammen mit dem Messrohr (20) aus wenigstens einem Kunststoff ausgebildeten, mittels eines urformenden Fertigungs-verfahrens hergestellten Gehäuseteilen (30a, 30b) zusammensetzbar oder zusammengesetzt ist, wobei das Gehäuse (30) mit zwei identischen Gehäuseteilen (30a, 30b) ausgebildet ist, die durch einen Schweißvorgang miteinander dichtungsfrei verbindbar oder verbunden sind, **dadurch gekennzeichnet, dass** an dem Einlauf (21) und dem Auslauf (22) angeordnete Kanalabschnitte (12a, 12b) in Form eines Kreisbogens gekrümmt und jeweils mittels eines einzigen gekrümmten Schiebers (64) geformt sind, dessen Außenwand den dem jeweiligen Ultraschallwandler (40a, 40b) zugewandten Wandabschnitt (34a, 34b) formt, und dass ein Mittelpunkt (27) desjenigen Kreises, dem der Kreisbogen zugeordnet ist, gegenüber der Längsachse (23) des Messrohrs (20) einen exzentrischen Versatz (25) aufweist.

2. Messvorrichtung nach Anspruch 1, wobei das Messrohr einen runden, insbesondere kreisrunden, Querschnitt aufweist.

3. Messvorrichtung nach Anspruch 1 oder 2, wobei die Kanalabschnitte (12a, 12b) an ihren dem Messrohr (20) abgewandten Ende jeweils mit einem Anschlussstück (14) versehen sind, wobei die Anschlussstücke (14) eine gemeinsame Mittelachse (26) aufweisen, die eine Tangente des Kreisbogens bildet.

4. Messvorrichtung nach einem der vorhergehenden Ansprüche, wobei die Aufnahmen (32a, 32b) sich jeweils an den einander abgewandten Stirnseiten des Gehäuses (30) befinden.

5. Messvorrichtung nach einem der vorhergehenden Ansprüche, wobei die jeweilige Aufnahme (32a, 32b) mittels eines Deckelteils (50) verschließbar ist.

6. Messvorrichtung nach Anspruch 5, wobei das Deckelteil (50) mit dem jeweiligen Gehäuseteil (30a, 30b) lösbar verbindbar vorgesehen ist.

7. Messvorrichtung nach Anspruch 5 oder 6, wobei dem Deckelteil (50) ein Stempelstück (52) zugeordnet ist, welches in Gebrauchsstellung den jeweiligen Ultraschallwandler (40a, 40b) zumindest mittelbar gegen den Wandabschnitt (34a, 34b) drückt.

8. Messvorrichtung nach Anspruch 7, wobei zwischen dem Stempelstück (42) und dem jeweiligen Ultraschallwandler (40a, 40b) ein elastisches Element (54) angeordnet ist.

9. Messvorrichtung nach Anspruch 7 oder 8, wobei das Stempelstück (52) gegenüber dem Deckelteil (50) beweglich, insbesondere drehbeweglich und bevorzugt gegenüber dem jeweiligen Gehäuseteil (30a, 30b) verdrehsicher vorgesehen ist.

10. Messvorrichtung nach einem der vorhergehenden Ansprüche, wobei die Gehäuseteile (30a, 30b) entlang des Messrohres (20) neben diesem einen durch die Zusammenfügung von Gehäuseteilen (30a, 30b) zu dem Gehäuse gebildeten, verschließbaren Bauraum (35) aufweisen, der zur Aufnahme elektronischer Komponenten eingerichtet ist.

11. Messvorrichtung nach Anspruch 10, wobei an einem Öffnungsrand (36) des Bauraums (35) eine Befestigungseinrichtung (37) vorgesehen ist, mittels derer das jeweilige Gehäuseteil (30a, 30b) festlegbar ist.

12. Messvorrichtung nach einem der vorhergehenden Ansprüche, wobei die Gehäuseteile (30a, 30b) in einer Gehäuseteilwand (38) eine verschließbare Öffnung (39) aufweisen.

13. Verfahren zur Herstellung einer Messvorrichtung (10) zur Messung des Durchflusses eines in einem Messrohr (20) strömenden Mediums mittels Ultraschalls, insbesondere einer Messvorrichtung (10) nach einem der vorhergehenden Ansprüche, mit zumindest den folgenden Schritten:
- Zur Verfügung stellen einer Spritzgießform für ein Gehäuseteil (30a, 30b);
- Einlegen eines geraden Schiebers (62) und eines einen Kreisbogenabschnitt beschreibenden Schiebers (64) in die Spritzgießform, wobei ein Mittelpunkt des dem Kreisbogen zugeordneten Kreises gegenüber der Längsachse des geraden Schiebers (62) einen exzentrischen Versatz aufweist;
- Schließen der Form und Spritzgießen des Gehäuseteils (30a, 30b), wobei durch den gekrümmten Schieber (64) ein Kanalabschnitt (12a, 12b) des Gehäuseteils (30a, 30b) mit einem einem Ultraschallwandler (40a, 40b) der Messvorrichtung (10) gegenüberliegenden Wandabschnitt (34a, 34b) geformt wird;
- Entformen des Gehäuseteils (30a, 30b) und Entnahme der Schieber (62, 64);
- Dichtungsfreies Verbinden zweier Gehäuseteile (30a, 30b) in einem Schweißvorgang entlang einer Naht (60);
- Anordnen von Ultraschallwandlern (40a, 40b) in Aufnahmen (32a, 32b) der Gehäuseteile (30a, 30b).

## Claims

1. Measuring device (10) for measuring the flow of a medium flowing in a measuring tube (20) by means of ultrasound, which measuring tube (20) is arranged in a housing (30) of the measuring device (10) between an inlet (21) and an outlet (22) for the medium, wherein at least two ultrasonic transducers (40a, 40b) spaced apart from one another along the measuring tube (20) are provided for transmitting sound through the medium, wherein at least one ultrasonic transducer (40a, 40b) is respectively arranged in the end regions of the measuring tube (20) in such a way that a measurement section is formed between the ultrasonic transducers (40a, 40b), which permits sound transmission parallel to a longitudinal axis (23) of the measuring tube (20), wherein a receptacle (32a, 32b) is respectively provided in the end regions of the measuring tube (20) on the housing (30), in which at least the respective ultrasonic transducer (40a, 40b) can be or is accommodated, wherein the respective receptacle (32a, 32b) is separated from the measuring tube (20) by a wall section (34a, 34b) of the respective housing part (30a, 30b), and wherein the wall section (34a, 34b) has a substantially uniform wall thickness over the majority of the cross-sectional area of the measuring tube (20), wherein the housing (30) together with the measuring tube (20) can be assembled or is assembled from housing parts (30a, 30b) made of at least one plastic and manufactured by means of a primary forming manufacturing method, wherein the housing (30) is formed with two identical housing parts (30a, 30b), which can be or are connected to one another without a seal by a welding process, **characterised in that** channel sections (12a, 12b) arranged at the inlet (21) and outlet (22) are curved in the shape of an arc and respectively shaped by means of a single curved slider (64), whose outer wall shapes the wall section (34a, 34b) facing the respective ultrasonic transducer (40a, 40b), and **in that** a centre point (27) of the circle which is associated with the arc has an eccentric offset (25) relative to the longitudinal axis (23) of the measuring tube (20).

2. Measuring device according to claim 1, wherein the measuring tube has a round, in particular circular, cross-section.

3. Measuring device according to claim 1 or 2, wherein the channel sections (12a, 12b) are respectively provided with a connecting piece (14) at their end facing away from the measuring tube (20), wherein the connecting pieces (14) have a common central axis (26), which forms a tangent of the arc.

4. Measuring device according to one of the preceding claims, wherein the receptacles (32a, 32b) are respectively located at the end faces of the housing (30) facing away from one another.

5. Measuring device according to one of the preceding claims, wherein the respective receptacle (32a, 32b) can be closed by means of a cover part (50).

6. Measuring device according to claim 5, wherein the cover part (50) is provided so as to be releasably connectable to the respective housing part (30a, 30b).

7. Measuring device according to claim 5 or 6, wherein the cover part (50) is associated with a punching part (52), which presses the respective ultrasonic transducer (40a, 40b) at least indirectly against the wall section (34a, 34b) in the use position.

8. Measuring device according to claim 7, wherein an elastic element (54) is arranged between the punching part (42) and the respective ultrasonic transducer (40a, 40b).

9. Measuring device according to claim 7 or 8, wherein the punching part (52) is provided to be moveable, in particular rotatable, with respect to the cover part (50) and secured against rotation preferably with respect to the respective housing part (30a, 30b).

10. Measuring device according to one of the preceding claims, wherein the housing parts (30a, 30b) have, along the measuring tube (20) adjacent thereto, a closeable installation space (35) formed by assembling housing parts (30a, 30b) to form the housing, which space is designed to accommodate electronic components.

11. Measuring device according to claim 10, wherein a fastening device (37) is provided on an opening edge (36) of the installation space (35), by means of which the respective housing part (30a, 30b) can be fixed.

12. Measuring device according to one of the preceding claims, wherein the housing parts (30a, 30b) have a closeable opening (39) in a housing part wall (38).

13. Method for producing a measuring device (10) for measuring the flow of a medium flowing in a measuring tube (20) by means of ultrasound, in particular a measuring device (10) according to one of the preceding claims, having at least the following steps:
- providing an injection mould for a housing part (30a, 30b);
- inserting a straight slider (62) and a slider (64) defining a circular arc section into the injection mould, wherein a centre point of the circle associated with the arc has an eccentric offset relative to the longitudinal axis of the straight slider (62);
- closing the mould and injection moulding the housing part (30a, 30b), wherein a channel section (12a, 12b) of the housing part (30a, 30b) is formed by the curved slider (64) with a wall section (34a, 34b) opposite an ultrasonic transducer (40a, 40b) of the measuring device (10);
- demoulding the housing part (30a, 30b) and removing the sliders (62, 64);
- connecting two housing parts (30a, 30b) in a seal-free manner in a welding process along a seam (60);
- arranging ultrasonic transducers (40a, 40b) in receptacles (32a, 32b) of the housing parts (30a, 30b) .

## Revendications

1. Dispositif de mesure (10) destiné à mesurer, au moyen d'ultrasons, le débit d'un milieu s'écoulant dans un tube de mesure (20), lequel tube de mesure (20) est disposé dans un boîtier (30) du dispositif de mesure (10) entre une entrée (21) et une sortie (22) pour le milieu, dans lequel au moins deux transducteurs à ultrasons (40a, 40b) espacés l'un de l'autre le long du tube de mesure (20) sont prévus pour une transmission du son à travers le milieu, dans lequel, dans des zones d'extrémité du tube de mesure (20) est respectivement disposé au moins un transducteur à ultrasons (40a, 40b), de telle sorte qu'un trajet de mesure est formé entre les transducteurs à ultrasons (40a, 40b), qui permet une transmission du son parallèlement à un axe longitudinal (23) du tube de mesure (20), dans lequel, dans les zones d'extrémité du tube de mesure (20) sur le boîtier (30) est respectivement prévu un logement (32a, 32b) dans lequel au moins le transducteur à ultrasons (40a, 40b) respectif peut être reçu ou est reçu, dans lequel le logement (32a, 32b) respectif est séparé du tube de mesure (20) par une partie de paroi (34a, 34b) de la partie de boîtier (30a, 30b) respective, et dans lequel la paroi de paroi (34a, 34b) a une épaisseur de paroi sensiblement constante dans la majeure partie de la surface de section transversale du tube de mesure (20), dans lequel le boîtier (30) conjointement au tube de mesure (20) peut être composé ou est composé de parties de boîtier (30a, 30b) réalisées à partir d'au moins une matière plastique et fabriquées au moyen d'un procédé de fabrication de transformation primaire (30a, 30b), dans lequel le boîtier (30) est formé de deux parties de boîtier identiques (30a, 30b) qui peuvent être reliées ou sont reliées l'une à l'autre sans joint d'échantéité par une opération de soudage, **caractérisé en ce que** des parties de canal (12a, 12b) disposées à l'entrée (21) et à la sortie (22) sont incurvées en forme d'arc de cercle et sont respectivement moulées au moyen d'une seule coulisse incurvée (64) dont la paroi extérieure moule la partie de paroi (34a, 34b) dirigée vers le transducteur à ultrasons (40a, 40b) respectif, et ce qu'un centre (27) du cercle auquel l'arc de cercle est associé, présente un décalage excentré (25) par rapport à l'axe longitudinal (23) du tube de mesure (20).

2. Dispositif de mesure selon la revendication 1, dans lequel le tube de mesure a une section transversale ronde, en particulier circulaire.

3. Dispositif de mesure selon la revendication 1 ou 2, dans lequel les parties de canal (12a, 12b) sont respectivement munies, au niveau de leur extrémité opposée au tube de mesure (20), d'une pièce de liaison (14), dans lequel les pièces de liaison (14) ont un axe central commun (26) qui forme une tangente de l'arc de cercle.

4. Dispositif de mesure selon l'une des revendications précédentes, dans lequel les logements (32a, 32b) sont respectivement situés sur les faces d'extrémité opposées du boîtier (30).

5. Dispositif de mesure selon l'une des revendications précédentes, dans lequel le logement (32a, 32b) respectif peut être fermé au moyen d'une partie de couvercle (50).

6. Dispositif de mesure selon la revendication 5, dans lequel la partie de couvercle (50) est destinée à pouvoir être reliée de manière détachable à la partie de boîtier (30a, 30b) respective.

7. Dispositif de mesure selon la revendication 5 ou 6, dans lequel une pièce tampon (52) est associée à la partie de couvercle (50), laquelle pièce tampon presse, en position d'utilisation, au moins indirectement le transducteur à ultrasons (40a, 40b) respectif contre la partie de paroi (34a, 34b).

8. Dispositif de mesure selon la revendication 7, dans lequel un élément élastique (54) est disposé entre la pièce tampon (42) et le transducteur à ultrasons (40a, 40b) respectif.

9. Dispositif de mesure selon la revendication 7 ou 8, dans lequel la pièce tampon (52) est destinée à être mobile par rapport à la partie de couvercle (50), en particulier mobile en rotation et bloquée en rotation de préférence par rapport à la partie de boîtier (30a, 30b) respective.

10. Dispositif de mesure selon l'une des revendications précédentes, dans lequel les parties de boîtier (30a, 30b) le long du tube de mesure (20) comportent à côté de celui-ci un espace de montage (35) pouvant être fermé, formé par l'assemblage de parties de boîtier (30a, 30b) et du boîtier, lequel espace de montage étant configuré pour recevoir des composants électroniques.

11. Dispositif de mesure selon la revendication 10, dans lequel sur un bord d'ouverture (36) de l'espace de montage (35) est prévu un dispositif de fixation (37) au moyen duquel la partie de boîtier (30a, 30b) respective peut être fixée.

12. Dispositif de mesure selon l'une des revendications précédentes, dans lequel les parties de boîtier (30a, 30b) comportent une ouverture pouvant être fermée (39) dans une paroi de partie de boîtier (38).

13. Procédé de fabrication d'un dispositif de mesure (10) destiné à mesurer, au moyen d'ultrasons, le débit d'un milieu s'écoulant dans un tube de mesure (20), en particulier d'un dispositif de mesure (10) selon l'une des revendications précédentes, comportant au moins les étapes suivantes consistant à :
- fournir un moule à injection pour une partie de boîtier (30a, 30b) ;
- insérer une coulisse droite (62) et une coulisse décrivant une section d'arc de cercle (64) dans le moule à injection, un centre du cercle associé à l'arc de cercle présentant un décalage excentré par rapport à l'axe longitudinal de la coulisse droite (62) ;
- fermer le moule et mouler par injection la partie du boîtier (30a, 30b), une partie de canal (12a, 12b) de la partie de boîtier (30a, 30b) étant formée par l'intermédiaire de la coulisse incurvée (64) avec une partie de paroi (34a, 34b) opposée à un transducteur à ultrasons (40a, 40b) du dispositif de mesure (10) ;
- démouler la partie de boîtier (30a, 30b) et retirer les coulisses (62, 64) ;
- relier sans joint d'étanchéité deux parties de boîtier (30a, 30b) en une seule opération de soudage le long d'un cordon de soudure (60) ;
- disposer des transducteurs à ultrasons (40a, 40b) dans des logements (32a, 32b) des parties de boîtier (30a, 30b).
